# EUROPÄISCHE PATENTANMELDUNG

(11) **EP 3 715 974 A1**
(43) Veröffentlichungstag der Anmeldung: **30.09.2020**
(21) Anmeldenummer: 19164950.8
(22) Anmeldetag: 25.03.2019
(51) Int. Cl.: G05B 19/05, G06F 8/34

(54) **STEUERPROGRAMMERSTELLUNG MIT TEMPORÄRER DARSTELLUNG VON ANSCHLÜSSEN**

(71) Anmelder: Siemens Aktiengesellschaft, 80333 München (DE)
(72) Erfinder: Reuter, Thomas, 76149 Karlsruhe (DE)

(57) **Zusammenfassung**

Ein Editor (4) bietet einer Bedienperson (5) vordefinierte Funktionsbausteine (FB) zur Instanziierung an. Er instanziiert die Funktionsbausteine (FB) und platziert sie aufgrund von Vorgaben (V) durch die Bedienperson (5) auf einer virtuellen Programmieroberfläche (9). Die Funktionsbausteine (FB) weisen jeweils Anschlüsse (15) auf, denen jeweils zumindest ein Name (18) und ein Attribut (19) zugeordnet sind. Das jeweilige Attribut (19) legt fest, ob der jeweilige Anschluss (15) auf der Programmieroberfläche (9) dargestellt werden soll oder nicht. Der Editor (4) stellt auf der Programmieroberfläche (9) zunächst nur die instanziierten Funktionsbausteine (FB) und deren darzustellende Anschlüsse (15) dar, nicht aber die nicht darzustellenden Anschlüsse (15). Der Editor (4) parametriert und/oder verbindet die dargestellten Anschlüsse (15) aufgrund von Vorgaben (V) der Bedienperson (5). Aufgrund eines Erstellungsbefehls (B) erstellt der Editor (4) das Steuerprogramm (6) für die Steuereinrichtung (7). Er berücksichtigt hierbei die instanziierten Funktionsbausteine (FB) und die Parametrierungen und Verbindungen von deren Anschlüssen (15). Bei Vorgabe einer zu suchenden Zeichenkette stellt der Editor (4) auf der Programmieroberfläche (9) zusätzlich zu den bereits dargestellten Anschlüssen (15) auch diejenigen Anschlüsse (15) dar, die zwar eigentlich nicht dargestellt werden sollen, deren jeweiliger Name (18) aber die Zeichenkette umfasst.

## Beschreibung

Die vorliegende Erfindung geht aus von einem Verfahren zum Erstellen eines Steuerprogramms für eine Steuereinrichtung,
- wobei ein Editor einer Bedienperson vordefinierte Funktionsbausteine zur Instanziierung anbietet,
- wobei der Editor die Funktionsbausteine aufgrund von entsprechenden Vorgaben durch die Bedienperson instanziiert und die instanziierten Funktionsbausteine auf einer virtuellen Programmieroberfläche platziert,
- wobei die Funktionsbausteine jeweils eine Anzahl von Anschlüssen aufweisen,
- wobei den Anschlüssen jeweils zumindest ein Name und ein Attribut zugeordnet sind,
- wobei das jeweilige Attribut festlegt, ob der jeweilige Anschluss bei der Darstellung des jeweiligen Funktionsbausteins auf der virtuellen Programmieroberfläche dargestellt werden soll oder nicht,
- wobei der Editor auf der virtuellen Programmieroberfläche zunächst nur die instanziierten Funktionsbausteine und diejenigen Anschlüsse der instanziierten Funktionsbausteine darstellt, die aufgrund des ihnen jeweils zugeordneten Attributs auf der virtuellen Programmieroberfläche dargestellt werden sollen, nicht aber diejenigen Anschlüsse der instanziierten Funktionsbausteine, die aufgrund des ihnen jeweils zugeordneten Attributs auf der virtuellen Programmieroberfläche nicht dargestellt werden sollen,
- wobei der Editor auf der virtuellen Programmieroberfläche dargestellte Anschlüsse aufgrund einer entsprechenden Vorgabe durch die Bedienperson parametriert und/oder miteinander verbindet,
- wobei der Editor aufgrund eines von der Bedienperson vorgegebenen Erstellungsbefehls das Steuerprogramm für die Steuereinrichtung erstellt,
- wobei der Editor beim Erstellen des Steuerprogramms die von der Bedienperson instanziierten Funktionsbausteine und die von der Bedienperson vorgegebenen Parametrierungen und Verbindungen der Anschlüsse der instanziierten Funktionsbausteine berücksichtigt.

Die vorliegende Erfindung geht weiterhin aus von einem Computerprogramm, das Maschinencode umfasst, der von einem Programmiergerät abarbeitbar ist, wobei die Abarbeitung des Maschinencodes durch das Programmiergerät bewirkt, dass das Programmiergerät einen Editor implementiert, der bei seinem Aufruf ein derartiges Verfahren ausführt.

Die vorliegende Erfindung geht weiterhin aus von einem Programmiergerät, wobei das Programmiergerät mit einem derartigen Computerprogramm programmiert ist, so dass die Ausführung des Computerprogramms bewirkt, dass das Programmiergerät einen Editor implementiert, der bei seinem Aufruf ein derartiges Verfahren ausführt.

Beim Projektieren von größeren oder kleineren Steuereinrichtungen - beispielsweise von Automatisierungssystemen für die Prozessautomatisierung oder die Fabrikautomatisierung oder von intelligenten Feldgeräten - werden oftmals grafische Editoren eingesetzt. Ein Beispiel eines derartigen Editors ist das Simatic PCS 7 Engineering System der Anmelderin. Es gibt aber ebenso auch andere Editoren anderer Hersteller.

Beim Programmieren des Steuerprogramms werden die einzelnen Funktionsbausteine vom Editor aufgrund entsprechender Vorgaben der Bedienperson instanziiert und auf der virtuellen Programmieroberfläche dargestellt. Manche der Funktionsbausteine sind relativ einfach und weisen nur wenige Anschlüsse auf. Ein einfaches Beispiel ist ein Logikgatter mit nur zwei oder vier Eingängen und einem Ausgang. Derartige einfache Funktionsbausteine können ohne weiteres vollständig auf der virtuellen Programmieroberfläche dargestellt werden. Es gibt aber auch andere Funktionsbausteine, die erheblich komplexer sind und manchmal mehrere 100 Anschlüsse aufweisen. Derartige Funktionsbausteine können, sofern die technologische Übersichtlichkeit gewahrt bleiben soll, nicht vollständig dargestellt werden.

Im Stand der Technik werden derartige komplexe Funktionsbausteine dadurch dargestellt, dass nur einige der Anschlüsse des jeweiligen Funktionsbausteins mit dargestellt werden. Die anderen Anschlüsse werden nicht mit dargestellt. Welche Anschlüsse dargestellt werden und welche nicht, wird für jeden Anschluss einzeln durch ein entsprechendes Attribut festgelegt, durch das für den jeweiligen Anschluss festgelegt wird, ob er dargestellt werden soll oder nicht. Das jeweilige Attribut ist von der Bedienperson einstellbar. Die Bedienperson kann also festlegen, welche Anschlüsse dargestellt werden und welche nicht.

Das Parametrieren und Attributieren der Anschlüsse ist im Stand der Technik auf zwei verschiedene Art und Weisen möglich. Zum einen ist es möglich, für den jeweiligen instanziierten Funktionsbaustein eine Liste aufzurufen, welche alle Anschlüsse dieses Funktionsbausteins enthält. Nachdem die Bedienperson den entsprechenden Anschluss in der Liste aufgefunden hat, kann die Bedienperson diesen Anschluss selektieren und sodann die Attribute des selektierten Anschlusses einstellen. Insbesondere kann die Bedienperson sogar festlegen, ob der jeweilige Anschluss dargestellt werden soll oder nicht. Auf die gleiche Art und Weise kann die Bedienperson nach dem Selektieren dieses Anschlusses auch Parameter für diesen Anschluss festlegen, d.h. dem Anschluss feste Werte zuweisen. Wenn es sich um einen Anschluss handelt, der aufgrund des dem Anschluss zugeordneten Attributs dargestellt werden soll, kann die Bedienperson zum anderen - ohne vorherigen Aufruf der Liste - direkt aus der grafischen Darstellung des Funktionsbausteins heraus dem dargestellten Anschluss einen Parameter zuweisen. Auch ein Verändern von Attributen ist auf diese Art und Weise möglich. Dies gilt auch für das Attribut, durch das festgelegt wird, ob der entsprechende Anschluss auf der grafischen Programmieroberfläche dargestellt werden soll oder nicht.

Zum Verbinden von Anschlüssen werden die Anschlüsse im Stand der Technik in der Regel in der grafischen Darstellung der Funktionsbausteine - also auf der Programmieroberfläche - dargestellt. Zum Verbinden zweier Anschlüsse selektiert die Bedienperson zunächst den einen der beiden Anschlüsse und sodann den anderen der beiden Anschlüsse. Aufgrund der Selektion der beiden Anschlüsse erstellt der Editor automatisch die entsprechende Verbindung der beiden Anschlüsse miteinander.

Diese Vorgehensweise wird jedoch sehr umständlich, sofern einer der miteinander zu verbindenden Anschlüsse aufgrund seines Attributs nicht dargestellt wird. Denn in diesem Fall muss die Bedienperson zunächst für den entsprechenden Funktionsbaustein die Liste aller Anschlüsse aufrufen, dort den entsprechenden Anschluss finden und durch entsprechende Änderung des diesem Anschluss zugeordneten Attributs erreichen, dass der entsprechende Anschluss in der grafischen Darstellung des Funktionsbausteins mit dargestellt werden soll. Danach muss die Bedienperson erneut die grafische Darstellung aufrufen und kann dort die entsprechende Verbindung erstellen.

Noch komplizierter wird es, wenn sogar beide der miteinander zu verbindenden Anschlüsse nicht dargestellt werden. Dann muss die Bedienperson nach der Änderung des Attributs des Anschlusses des einen Funktionsbausteins zunächst wieder zu der grafischen Darstellung der Funktionsbausteine wechseln, dort den anderen Funktionsbaustein selektieren und auch für diesen Funktionsbaustein den entsprechenden Anschluss suchen und sein Attribut entsprechend ändern. Erst danach kann die Bedienperson wieder die grafische Darstellung aufrufen und dort die entsprechende Verbindung erstellen.

Bereits aus diesem Grund ist die Vorgehensweise sehr umständlich.

Darüber hinaus könnte die Bedienperson danach nur theoretisch weitere Verbindungen anderer Anschlüsse vornehmen. Denn in der Praxis müssen derartige Verbindungen, bei denen mindestens einer der beiden Anschlüsse nicht dargestellt wird, zu Dutzenden und in manchen Fällen gar zu Hunderten vorgenommen werden. Die zusätzliche Darstellung von Dutzenden oder gar Hunderten weiterer Anschlüsse überfrachtet die grafische Darstellung in erheblichem Ausmaß. In der Praxis muss die Bedienperson daher nach dem Verbinden der entsprechenden Anschlüsse die Darstellung eines der Anschlüsse oder beider Anschlüsse wieder rückgängig machen. Es muss also zumindest der Anschluss in der grafischen Darstellung selektiert und dessen Attribut wieder geändert werden. In manchen Fällen ist es sogar erforderlich, erneut auf die Listendarstellung zurückzugreifen und das Attribut dort zu ändern.

Die Aufgabe der vorliegenden Erfindung besteht darin, Möglichkeiten zu schaffen, mittels derer auf einfache und zuverlässige Weise eine Parametrierung und Verbindung von Anschlüssen von Funktionsbausteinen implementiert werden kann.

Die Aufgabe wird durch ein Verfahren mit den Merkmalen des Anspruchs 1 gelöst. Vorteilhafte Ausgestaltungen des Verfahrens sind Gegenstand der abhängigen Ansprüche 2 bis 7.

Erfindungsgemäß wird ein Verfahren der eingangs genannten Art dadurch ausgestaltet, dass der Editor bei Vorgabe einer zu suchenden Zeichenkette durch die Bedienperson auf der virtuellen Programmieroberfläche zusätzlich zu den Anschlüssen, die der Editor bereits aufgrund der ihnen zugeordneten Attribute auf der virtuellen Programmieroberfläche darstellt, auch diejenigen Anschlüsse darstellt, die zwar aufgrund der ihnen zugeordneten Attribute nicht auf der virtuellen Programmieroberfläche dargestellt werden sollen, deren Name aber die Zeichenkette umfasst.

Mit der Vorgabe der zu suchenden Zeichenkette werden also zusätzlich zu den Anschlüssen, die aufgrund ihres Attributs dargestellt werden, zusätzlich temporär auch diejenigen Anschlüsse eingeblendet, die zwar nicht aufgrund ihres Attributs dargestellt werden, deren Name aber die zu suchende Zeichenkette enthält. Solange die zu suchende Zeichenkette vorgegeben ist, können die dadurch zusätzlich mit dargestellten Anschlüsse auf die gleiche Art und Weise wie die anderen Anschlüsse, die aufgrund ihres Attributs dargestellt werden, parametriert, attributiert und verbunden werden. Mit dem Ende der Vorgabe der zu suchenden Zeichenkette werden die temporär eingeblendeten Anschlüsse jedoch wieder ausgeblendet.

Es ist daher auf einfache und schnelle Weise möglich, Anschlüsse temporär darzustellen und sie auch wieder auszublenden.

In aller Regel erfolgt die Vorgabe einer derartigen Zeichenkette, weil die Bedienperson einen ganz bestimmten Anschluss sucht. Vorzugsweise ist das erfindungsgemäße Verfahren daher dadurch ausgestaltet, dass der Editor bei Vorgabe der zu suchenden Zeichenkette diejenigen Anschlüsse, deren Namen die Zeichenkette umfasst, optisch hervorgehoben darstellt. Diese Vorgehensweise wird nicht nur für diejenigen Anschlüsse ergriffen, die nur aufgrund des Namens eingeblendet werden, sondern auch für die aufgrund ihres Attributs dargestellten Anschlüsse. Dadurch wird insbesondere die Situation berücksichtigt, dass der von der Bedienperson gesuchte Anschluss bereits dargestellt ist, von der Bedienperson jedoch übersehen wurde. Die optische Hervorhebung kann auf verschiedene Art und Weise erfolgen. Beispielsweise kann eine optische Hervorhebung durch Darstellung in vergrößerter Schrift, mit einem farbigen Hintergrund, durch blinkende Darstellung usw. erfolgen.

Vorzugsweise ist es möglich, dass der Editor aufgrund einer entsprechenden Vorgabe durch die Bedienperson einen der dargestellten Anschlüsse selektiert. In diesem Fall ist eine besonders einfache Art und Weise zur Erstellung der Verbindungen dadurch gegeben, dass der Editor aufgrund der Selektion des einen dargestellten Anschlusses automatisch diejenigen der dargestellten Anschlüsse optisch hervorgehoben darstellt, die mit dem selektierten Anschluss prinzipiell verbindbar sind.

Dadurch ist zwar nicht gewährleistet, dass die Bedienperson die richtige Verbindung vornimmt. Es ist aber gewährleistet, dass die Bedienperson zumindest eine prinzipiell mögliche Verbindung erstellt. Es wird also ein Teil der möglichen Fehler von vornherein ausgeschlossen.

Vorzugsweise ist das Verfahren dadurch ausgestaltet, dass der Editor aufgrund einer entsprechenden Vorgabe durch die Bedienperson das eine Attribut eines der dargestellten Anschlüsse ändert. Dies kann insbesondere auch für diejenigen der dargestellten Anschlüsse gelten, die nur deshalb dargestellt werden, weil ihr Name die zu suchende Zeichenkette enthält. Dadurch können - sofern die Bedienperson dies wünscht - diese Anschlüsse auf einfache Weise dauerhaft sichtbar geschaltet werden, so dass sie also bei Beenden der Vorgabe der zu suchenden Zeichenkette weiterhin dargestellt werden.

Vorzugsweise ist weiterhin vorgesehen, dass der Editor aufgrund einer entsprechenden Vorgabe durch die Bedienperson einen einzelnen dargestellten Anschluss eines instanziierten Funktionsbausteins selektiert und dass der Editor aufgrund der Selektion eine vollständige Beschreibung des selektierten Anschlusses an die Bedienperson ausgibt. Dadurch kann die Bedienperson sich auf einfache und komfortable Weise eine vollständige Information über den jeweiligen Anschluss verschaffen.

Im einfachsten Fall stellt der Editor bei Vorgabe der zu suchenden Zeichenkette durch die Bedienperson auf der virtuellen Programmieroberfläche zusätzlich zu den Anschlüssen, die der Editor bereits aufgrund der ihnen zugeordneten Attribute auf der virtuellen Programmieroberfläche darstellt, alle Anschlüsse aller Funktionsbausteine dar, die zwar aufgrund der ihnen zugeordneten Attribute nicht auf der virtuellen Programmieroberfläche dargestellt werden sollen, deren Namen aber die Zeichenkette umfasst. Es ist jedoch ebenso möglich, dass der Editor vor oder nach der Vorgabe der zu suchenden Zeichenkette durch die Bedienperson aufgrund entsprechender Vorgaben durch die Bedienperson mindestens einen instanziierten Funktionsbaustein selektiert und dass der Editor die vom Attribut des jeweiligen Anschlusses unabhängige Darstellung der Anschlüsse, deren Namen die Zeichenkette umfasst, auf die selektierten Funktionsbausteine beschränkt. Diese Vorgehensweise ist insbesondere mit der zusätzlichen Darstellung aller Anschlüsse aller Funktionsbausteine, deren Namen die zu suchende Zeichenkette umfasst, kombinierbar. Insbesondere ist es möglich, zunächst alle Anschlüsse aller Funktionsbausteine darzustellen, deren Namen die zu suchende Zeichenkette umfasst. Nach der zusätzlichen Selektion mindestens eines der Funktionsbausteine wird die Darstellung dann vom Editor entsprechend nachgeführt.

Der Editor platziert die instanziierten Funktionsbausteine zunächst ohne Berücksichtigung der später möglicherweise darzustellenden Anschlüsse, also der Anschlüsse, die später aufgrund des Umstands, dass ihr Name die zu suchende Zeichenkette umfasst, temporär mit eingeblendet werden. Beim zusätzlichen Einblenden muss der jeweilige instanziierte Funktionsbaustein oftmals entsprechend vergrößert werden. Es kann daher die Situation auftreten, dass in dem Bereich der virtuellen Programmieroberfläche, in den hinein der jeweilige instanziierte Funktionsbaustein vergrößert werden soll, bereits ein anderer Funktionsbaustein angeordnet ist. Zur Lösung dieses Konflikts ist vorzugsweise vorgesehen, dass der Editor die Darstellung der instanziierten Funktionsbausteine auf der virtuellen Programmieroberfläche aufgrund der zusätzlichen Darstellung der Anschlüsse, die aufgrund des ihnen zugeordneten Attributs nicht dargestellt werden sollen, deren Namen aber die Zeichenkette umfasst, zwar vergrößert, dass der Editor aber die zusätzlich dargestellten Anschlüsse bereits bei der Darstellung dieser Anschlüsse als solcher oder aufgrund einer Selektion des entsprechenden instanziierten Funktionsbausteins durch die Bedienperson im Vordergrund darstellt. Dadurch wird erreicht, dass die entsprechenden Anschlüsse nicht anderweitig verdeckt sind oder nicht mehr anderweitig verdeckt werden, so dass die Bedienperson auch ordnungsgemäß auf sie zugreifen kann.

Die Aufgabe wird weiterhin durch ein Computerprogramm mit den Merkmalen des Anspruchs 8 gelöst. Erfindungsgemäß wird ein Computerprogramm der eingangs genannten Art derart ausgestaltet, dass die Abarbeitung des Maschinencodes durch das Programmiergerät bewirkt, dass das Programmiergerät einen Editor implementiert, der bei seinem Aufruf ein erfindungsgemäßes Verfahren ausführt.

Die Aufgabe wird weiterhin durch ein Programmiergerät mit den Merkmalen des Anspruchs 9 gelöst. Erfindungsgemäß ist ein Programmiergerät der eingangs genannten Art mit einem erfindungsgemäßen Computerprogramm programmiert, so dass die Ausführung des Computerprogramms bewirkt, dass das Programmiergerät einen Editor implementiert, der bei seinem Aufruf ein erfindungsgemäßes Verfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Programmiergerät,
- FIG 2: ein Ablaufdiagramm,
- FIG 3: eine Steuereinrichtung und einen technischen Prozess,
- FIG 4: eine Bildschirmdarstellung,
- FIG 5: mehrere Funktionsbausteine auf einer Programmieroberfläche,
- FIG 6: eine Detailansicht eines einzelnen Funktionsbausteins,
- FIG 7 bis 10: jeweils mehrere Funktionsbausteine auf einer Programmieroberfläche,
- FIG 11 bis 16: jeweils eine Bildschirmdarstellung und
- FIG 17 und 18: jeweils mehrere Funktionsbausteine auf einer Programmieroberfläche.

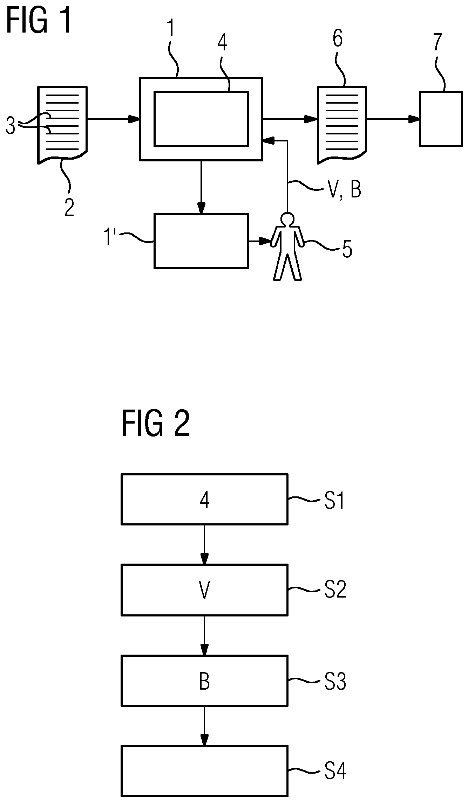

Gemäß FIG 1 ist ein Programmiergerät 1 mit einem Computerprogramm 2 programmiert. Das Computerprogramm 2 umfasst Maschinencode 3, der von dem Programmiergerät 1 abarbeitbar ist. Die Ausführung des Computerprogramms 2 bzw. die Abarbeitung des Maschinencodes 3 durch das Programmiergerät 1 bewirkt, dass das Programmiergerät 1 einen Editor 4 implementiert, der bei seinem Aufruf ein Verfahren ausführt, das nachstehend näher erläutert wird.

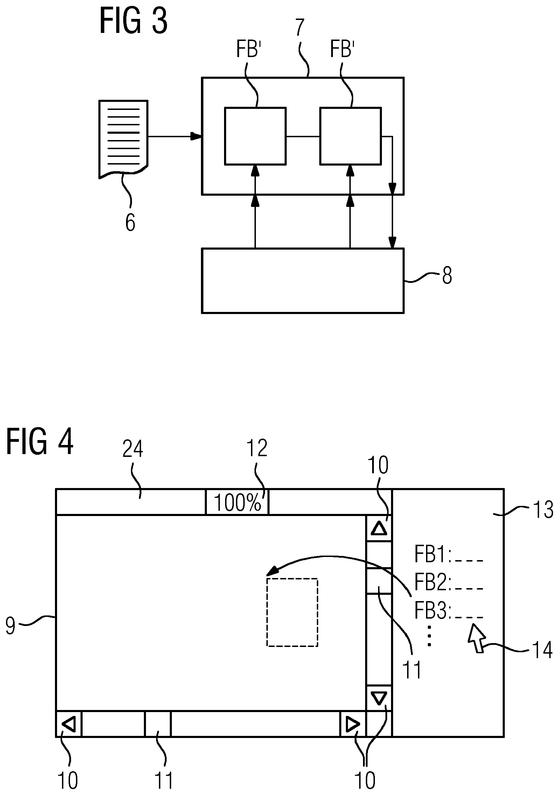

Gemäß FIG 2 wird der Editor 4 zunächst in einem Schritt S1 von einer Bedienperson 5 aufgerufen. In einem Schritt S2 macht die Bedienperson 5 dem Editor 4 Vorgaben V, aufgrund derer der Editor 4 entsprechende Aktionen ausführt. Die Vorgaben V und die zugehörigen Aktionen werden nachstehend noch detailliert erläutert werden. In einem Schritt S3 gibt die Bedienperson 5 dem Editor 4 einen Erstellungsbefehl B vor. Aufgrund des Erstellungsbefehls B erstellt der Editor 4 in einem Schritt S4 ein Steuerprogramm 6 für eine Steuereinrichtung 7. Das Steuerprogramm 6 kann - entweder direkt im Rahmen der Erstellung des Steuerprogramms 6 oder zu einem späteren Zeitpunkt - in die Steuereinrichtung 7 geladen werden, so dass die Steuereinrichtung 7 das Steuerprogramm 6 bei der späteren Steuerung eines technischen Prozesses 8 (siehe FIG 3) abarbeiten kann.

FIG 4 zeigt ein typisches Bild, das der Editor 4 auf einem Bildschirm oder Monitor 1' generiert. Der Bildschirm oder Monitor 1' kann integraler Bestandteil des Programmiergeräts 1 sein oder mit dem Programmiergerät 1 verbunden sein. Insbesondere umfasst das vom Editor 4 generierte Bild eine virtuelle Programmieroberfläche 9. Die Programmieroberfläche 9 ist als virtuell bezeichnet, weil sie erheblich größer als der Bildschirm bzw. der Monitor 1' ist. Der jeweils dargestellte Bestandteil der Programmieroberfläche 9 kann durch Skalieren und Verschieben eingestellt werden. Ein Verschieben ist beispielsweise durch entsprechende Cursorfunktionen 10 oder durch Bewegen von sogenannten Slidern 11 realisierbar, ein Skalieren durch Vorgabe eines entsprechenden Skalierungsfaktors in einem Skalierungsfeld 12 oder auf andere übliche Weise. Die entsprechenden Vorgehensweisen sind für Standardprogramme wie beispielsweise WORD und EXCEL allgemein bekannt und müssen daher nicht im Detail erläutert werden.

Der Editor 4 bietet der Bedienperson 5 vordefinierte Funktionsbausteine FB zur Instanziierung an. Die Funktionsbausteine FB können beispielsweise Logikgatter, Regler, Multiplexer, Analog-Digital-Wandler, Digital-Analog-Wandler, Signalgeneratoren und andere mehr sein. Beispielsweise kann der Editor 4 entsprechend der Darstellung in FIG 4 in einem Auswahlfeld 13 generische Bezeichnungen für die Funktionsbausteine FB anzeigen. Die Anzeige kann beispielsweise nach funktionalen Gruppen gegliedert oder alphabetisch sortiert sein. Die Funktionsbausteine FB sind in FIG 4 und den weiteren FIG teilweise durch eine Ziffer ergänzt, um sie bei Bedarf sprachlich voneinander unterscheiden zu können.

Der Editor 4 instanziiert die Funktionsbausteine FB aufgrund von entsprechenden Vorgaben V durch die Bedienperson 5 und platziert die instanziierten Funktionsbausteine FB auf der Programmieroberfläche 9 entsprechend den Vorgaben V. Beispielsweise kann die Bedienperson 5 entsprechend der Darstellung in FIG 4 mit einer Maus oder einer ähnlichen Eingabeeinrichtung ein Markierungselement 14 auf einem bestimmten der angebotenen Funktionsbausteine FB positionieren und sodann diesen Funktionsbaustein FB selektieren. Das Selektieren kann beispielsweise, wie allgemein üblich, durch einmaliges Klicken erfolgen. Danach gibt die Bedienperson 5 dem Editor 4 eine Positionierungsangabe in der Programmieroberfläche 9 vor. Der Editor 4 positioniert darauf hin eine Instanziierung des selektierten Funktionsbausteins FB an der vorgegebenen Stelle. Beispielsweise kann die Bedienperson 5 nach dem Selektieren eines bestimmten Funktionsbausteins FB den selektierten Funktionsbaustein FB nochmals Anklicken, nunmehr aber die Klick-Taste der Maus oder dergleichen gedrückt halten, sodann den selektierten Funktionsbaustein FB "mit der Maus an die gewünschte Stelle ziehen" und schließlich die Klick-Taste der Maus wieder loslassen. Das "Ziehen mit der Maus" ist in FIG 4 für einen Funktionsbaustein FB durch einen geschwungenen Pfeil und eine gestrichelte Darstellung des zugehörigen Funktionsbausteins FB angedeutet. Die entsprechende Vorgehensweise ist Fachleuten für das Positionieren von Elementen allgemein bekannt und muss daher nicht im Detail erläutert werden.

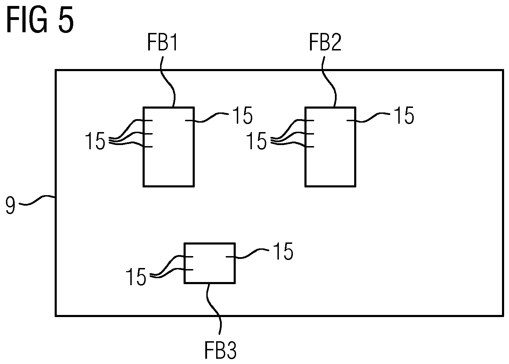

Das Instanziieren und Platzieren der Funktionsbausteine FB wird so oft wiederholt, wie es erforderlich ist. Die instanziierten Funktionsbausteine FB werden auf der Programmieroberfläche 9 entsprechend der Darstellung in FIG 5 in der Regel derart angeordnet, dass sie sich gegenseitig nicht verdecken. In der Regel werden sie sogar derart angeordnet, dass sie einen Abstand voneinander aufweisen.

Die nachfolgenden Ausführungen beziehen sich, auch wenn dies nicht jedes Mal wiederholt wird, stets und ausnahmslos auf die instanziierten Funktionsbausteine FB.

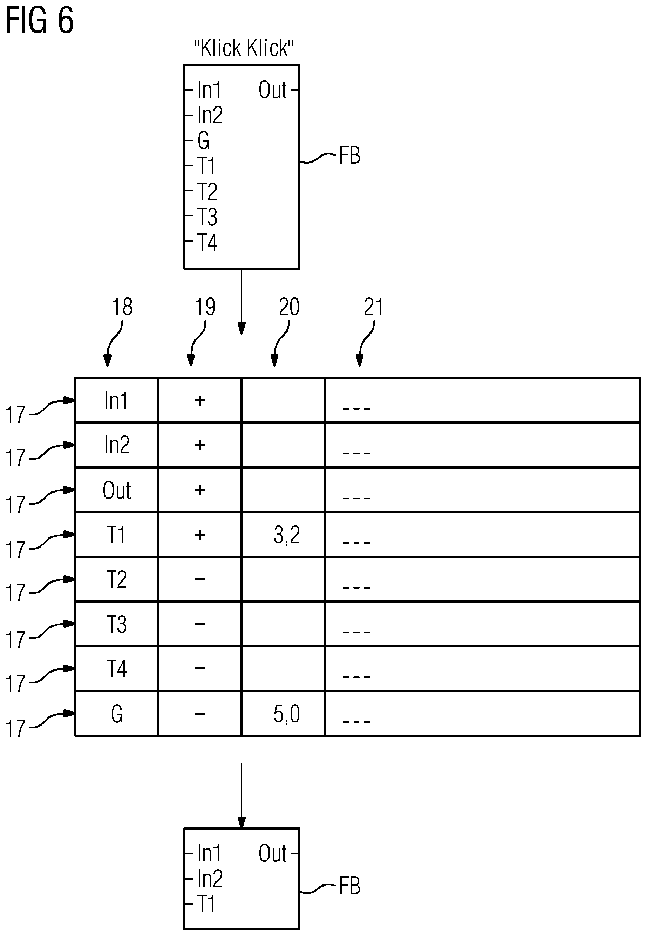

Die Funktionsbausteine FB weisen jeweils eine Anzahl von Anschlüssen 15 auf. Die Bedienperson 5 kann üblicherweise - beispielsweise entsprechend der Darstellung in FIG 6 durch Doppelklicken auf einen jeweiligen Funktionsbaustein FB, durch einfaches Klicken auf den jeweiligen Funktionsbaustein FB oder durch anderweitige Selektion des Funktionsbausteins FB - eine Liste 16 aufrufen, in der alle Anschlüsse 15 des jeweiligen Funktionsbausteins FB aufgelistet sind. Jeder Listeneintrag 17 in der Liste 16 korrespondiert mit einem der Anschlüsse 15 des entsprechenden Funktionsbausteins FB.

Je nach Funktionsbaustein FB kann die Liste 16 sehr kurz sein und beispielsweise nur zwei oder drei Listeneinträge 17 umfassen. Bei anderen Funktionsbausteine FB kann die Liste 16 aber auch sehr lang sein und mehrere 100 Listeneinträge 17 umfassen. Auch Werte dazwischen sind selbstverständlich möglich. Dargestellt ist in FIG 6 - rein beispielhaft - eine Liste 16 mit insgesamt acht Listeneinträgen 17.

Entsprechend der Darstellung in FIG 6 ist jedem Anschluss 15 aufgrund eines entsprechenden Eintrags in seinem jeweiligen Listeneintrag 17 ein Name 18 zugeordnet. Weiterhin ist jedem Anschluss 15 aufgrund eines entsprechenden Eintrags in seinem jeweiligen Listeneintrag 17 ein Attribut 19 zugeordnet. Attribute 19 sind Eigenschaften des jeweiligen Anschlusses 15, die vom Editor 4 im Rahmen seiner internen Handhabung des jeweiligen Anschlusses 15 berücksichtigt werden. Sie gehen jedoch nicht in die Erstellung des Steuerprogramms 6 ein. Dies ist ein Gegensatz zu einem Parameter 20. Ein Parameter 20 ist ein Wert, der einem bestimmten Anschluss 15 fest zugeordnet wird und vom Editor 4 bei der Erstellung des Steuerprogramms 6 berücksichtigt wird. Parameter 20 können vorhanden sein, müssen aber nicht vorhanden sein.

Je nach Lage des Einzelfalls können dem jeweiligen Anschluss 15 zusätzlich zu dem Attribut 19 auch andere Attribute zugeordnet sein. Dies ist im Rahmen der vorliegenden Erfindung aber von untergeordneter Bedeutung. Hier kommt es nur auf das Attribut 19 an, das festlegt, ob der jeweilige Anschluss 15 bei der Darstellung des jeweiligen Funktionsbausteins FB auf der Programmieroberfläche 9 dargestellt werden soll oder nicht. Ein "+" steht in FIG 6 für einen darzustellenden Anschluss 15, ein "-" für einen nicht darzustellenden Anschluss 15. Nachfolgend wird teilweise kurz die Formulierung "sichtbarer Anschluss" oder "sichtbar geschalteter Anschluss" für einen aufgrund seines Attributs 19 darzustellenden Anschluss 15 verwendet und hiermit korrespondierend "unsichtbarer Anschluss" oder "unsichtbar geschalteter Anschluss" für einen aufgrund seines Attributs 19 nicht darzustellenden Anschluss 15.

Oftmals weisen die Listeneinträge 17 weitere Angaben auf. Beispielsweise können sie entsprechend der Darstellung in FIG 6 zusätzlich eine Typenangabe umfassen. Mögliche Typangaben können - beispielsweise - beispielsweise A1 und A2 für eine analoge Eingangsgröße bzw. Ausgangsgröße, D1 und D2 für eine digitale Eingangsgröße bzw. Ausgangsgröße, L1 und L2 für eine logische Eingangsgröße bzw. Ausgangsgröße und andere mehr sein. Weiterhin können die Listeneinträge 17 einen Text 21 umfassen, der eine textuelle Beschreibung des jeweiligen Anschlusses 15 enthält. Auch weitere Angaben sind möglich.

Gemäß der Darstellung in FIG 6 oben weist der entsprechende Funktionsbaustein FB - rein beispielhaft - insgesamt acht Anschlüsse 15 auf. Diese Anschlüsse 15 werden nachstehend einzeln erläutert. Hierbei wird zur Identifizierung jeweils direkt der Name 18 des jeweiligen Anschlusses 15 verwendet Es wird jedoch nochmals darauf hingewiesen, dass diese Zuordnung rein beispielhaft ist und nur der Erläuterung der vorliegenden Erfindung dient, da sie anhand eines konkreten Beispiels erheblich besser erläutert werden kann.

Der in FIG 6 dargestellte Funktionsbaustein FB soll ein Regler sein. Funktionsbausteine FB, die Regler realisieren, weisen in der Regel viele, viele Anschlüsse 15 auf. Nachstehend wird jedoch, wie bereits erwähnt, angenommen, dass nur acht Anschlüsse 15 vorhanden sind. Denn die Erfindung lässt sich mit acht Anschlüssen 15 ebenso verstehen wie mit beispielsweise 200 Anschlüssen 15, eine Erläuterung mit 200 Anschlüssen würde den relevanten Sachverhalt jedoch mit Details überfrachten, die für das Verständnis nicht erforderlich sind.

Die Anschlüsse In1 und In2 sind Eingangsanschlüsse, und zwar für den Istwert (In1) und den Sollwert (In2) des Reglers. Der Anschluss Out ist der Ausgangsanschluss des Reglers zum Ausgeben der Stellgröße des Reglers. Die Anschlüsse T1 und T2 sind Eingangsanschlüsse, über die Zeitkonstanten vorgegeben werden können, die die Ermittlung eines Integralanteils bzw. eines Differenzialanteils der Stellgröße relevant sind. Die Anschlüsse T3 und T4 sind Eingangsanschlüsse, über die Zeitkonstanten vorgegeben werden können, welche eine Vorabverarbeitung des Istwertes bzw. des Sollwertes des Reglers betreffen. Der Anschluss G ist ein Eingangsanschluss, welcher der Vorgabe einer Proportionalverstärkung dient, die zumindest im Rahmen der Ermittlung eines Proportionalanteils der Stellgröße verwendet wird.

In der Praxis sind bei einem Regler, wie bereits erwähnt, erheblich mehr Anschlüsse 15 vorhanden. Weiterhin kommt es im Rahmen der vorliegenden Erfindung nicht auf die Funktionalität der verschiedenen Anschlüsse 15 an, sondern hauptsächlich nur auf ihre Namen 18 und ergänzend noch auf ihren Signalfluss (Eingang oder Ausgang) und ihre Signalart (analog, digital, logisch, ...).

Von den erläuterten acht Anschlüssen 15 sollen entsprechend der Darstellung in FIG 6 die Anschlüsse In1, In2, Out und T1 aufgrund des ihnen zugeordneten Attributs 19 dargestellt werden. Die Anschlüsse In1, In2, Out und T1 sind also sichtbar geschaltet. Die anderen Anschlüsse T2, T3, T4 und G sollen entsprechend der Darstellung in FIG 6 aufgrund des ihnen zugeordneten Attributs 19 nicht dargestellt werden. Die Anschlüsse T2, T3, T4 und G sind also unsichtbar geschaltet. Dies ist in FIG 6 unten dargestellt.

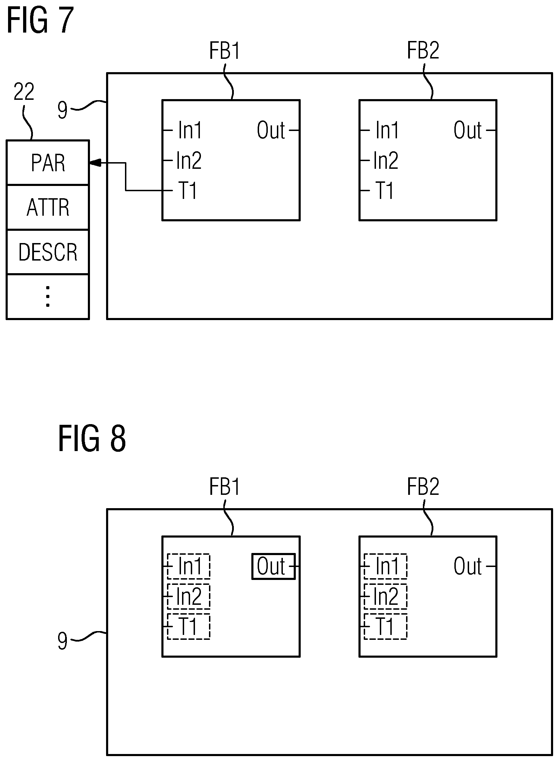

In der Darstellung gemäß FIG 7 ist - rein beispielhaft - angenommen, dass die Bedienperson 5 zwei der in FIG 6 dargestellten Funktionsbausteine FB instanziiert hat und die Attribute 19 beider Funktionsbausteine FB identisch sind. In diesem Fall stellt der Editor 4 entsprechend der Darstellung in FIG 7 auf der Programmieroberfläche 9 die beiden instanziierten Funktionsbausteine FB und bezüglich dieser beiden Funktionsbausteine FB jeweils die Anschlüsse In1, In2, Out und T1 dar. Die anderen Anschlüsse T2, T3, T4 und G werden nicht mit dargestellt.

Zum Parametrieren eines sichtbaren Anschlusses 15 - beispielsweise des Anschlusses T1 des Funktionsbausteins FB1 - kann die Bedienperson 5 durch eine entsprechende Vorgabe V den entsprechenden Anschluss T1 selektieren, beispielsweise durch Anklicken und Betätigen der rechten Maustaste einer Maus oder einer ähnlichen Eingabeeinrichtung. Aufgrund der Selektion kann der Editor 4 beispielsweise ein Menü 22 anzeigen, in dem der Bedienperson 5 zur Auswahl angeboten wird, den entsprechenden Anschluss T1 zu parametrieren (PAR) oder zu attributieren (ATTR), sich eine vollständige Beschreibung des entsprechenden Anschlusses T1 anzeigen zu lassen (DESCR) usw. Nach Anwählen der Funktion "Parametrieren" kann die Bedienperson 5 sodann eine Vorgabe V machen, aufgrund welcher der Editor 4 den selektierten Anschluss T1 parametriert. In analoger Weise kann die Bedienperson 5 nach Anwählen der Funktion "Attributieren" eine Vorgabe V machen, aufgrund welcher der Editor 4 den selektierten Anschluss T1 attributiert. Im Rahmen der Attributierung kann insbesondere auch das Attribut 19 geändert werden, aufgrund dessen der Anschluss T1 sichtbar geschaltet ist. Die Bedienperson 5 kann den Anschluss T1 - oder nach vorheriger Selektion auch einen anderen Anschluss 15 - somit aus der Programmieroberfläche 9 heraus unsichtbar schalten.

Weiterhin ist es entsprechend der Darstellung in den FIG 8 bis 10 möglich, dass die Bedienperson 5 durch eine entsprechende Vorgabe V zwei dargestellte Anschlüsse 15 miteinander verbindet. Die FIG 8 bis 10 zeigen die gleichen Funktionsbausteine FB wie FIG 7.

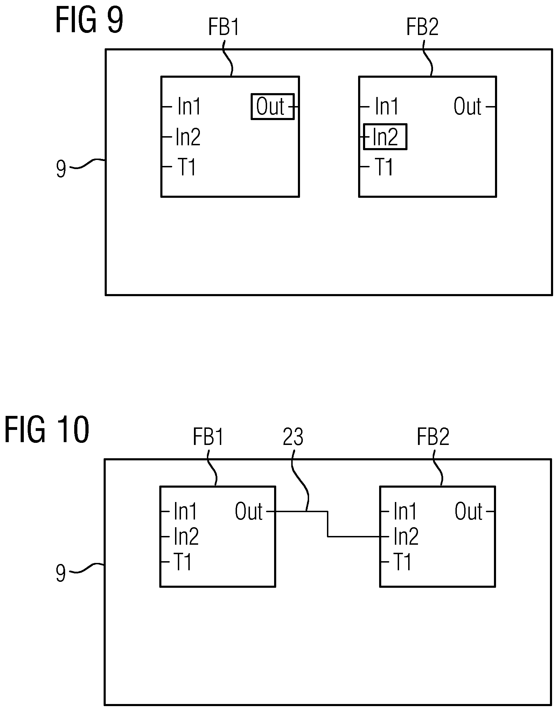

Zum Verbinden zweier dargestellter Anschlüsse 15 miteinander selektiert der Editor 4 aufgrund einer entsprechenden Vorgabe V der Bedienperson 5 zunächst einen der beiden Anschlüsse 15, beispielsweise den Anschluss Out des Funktionsbausteins FB1. Die Selektion ist in FIG 8 durch eine Umrahmung angedeutet. Sodann - während also diese Selektion gültig ist - selektiert der Editor 4 aufgrund einer entsprechenden Vorgabe V der Bedienperson 5 den anderen der beiden Anschlüsse 15, beispielsweise den Anschluss In2 des Funktionsbausteins FB2. Diese Selektion ist in FIG 9 durch eine Umrahmung angedeutet. Aufgrund der Selektion der beiden Anschlüsse 15 verbindet der Editor 4 sodann automatisch die beiden nacheinander selektierten Anschlüsse 15 miteinander. Dies ist in FIG 10 durch eine entsprechende Verbindungslinie 23 dargestellt. Die so definierte Verbindung legt den Datenfluss von dem einen selektierten Anschluss 15 zum anderen selektierten Anschluss 15 fest. Mit dem Festlegen der Verbindung wird entsprechend der Darstellung in FIG 10 die Selektion der beiden Anschlüsse 15 wieder aufgehoben. Natürlich könnten im Rahmen der Vorgehensweise der FIG 8 bis 10 auch zwei andere Anschlüsse 15 miteinander verbunden werden.

Die FIG 8 bis 10 zeigen zugleich auch weitere bevorzugte Ausgestaltungen der vorliegenden Erfindung. Zum einen hebt der Editor 4 - zumindest in der Regel - den zuerst selektierten Anschluss 15 in der Darstellung auf der Programmieroberfläche 9 optisch hervor. Beispielsweise kann der Editor 4 den zuerst selektierten Anschluss 15 farbig hinterlegen oder blinkend darstellen oder - wie in Figur 8 gezeigt - umrahmen. Um der Bedienperson 5 die Auswahl des "richtigen" anderen Anschlusses 15 zu erleichtern, hebt der Editor 4 aufgrund der Selektion des einen Anschlusses 15 - in dem Beispiel des Anschlusses Out des Funktionsbausteins FB1 - zum anderen zugleich automatisch diejenigen der dargestellten Anschlüsse 15 optisch hervor, die mit dem selektierten Anschluss 15 prinzipiell verbindbar sind. Allgemein gesprochen sind dies diejenigen Anschlüsse 15, deren Signaltyp - beispielsweise analog, digital, logisch - mit dem Signaltyp des zuerst selektierten Anschlusses 15 korrespondiert und bei denen weiterhin der Signalfluss invers zum Signalfluss des zuerst selektierten Anschlusses 15 ist. Da in dem konkreten Beispiel zuerst der Anschluss Out des Funktionsbausteins FB1 selektiert wurde, werden konkret in dem gegebenen Beispiel die Anschlüsse In1 und In2 beider Funktionsbausteine FB und weiterhin die Anschlüsse T1 beider Funktionsbausteine FB optisch hervorgehoben. Dies ist in FIG 8 durch eine gestrichelte Umrahmung der entsprechenden Anschlüsse 15 dargestellt.

Die bisher erläuterten Vorgehensweisen können und werden im Stand der Technik nur bezüglich der sichtbaren Anschlüsse 15 ausgeführt. Die unsichtbaren Anschlüsse 15 bleiben im Stand der Technik völlig unbeteiligt. Die Einbindung der unsichtbaren Anschlüsse 15 in die obenstehend erläuterten Vorgehensweisen ist der Kerngegenstand der vorliegenden Erfindung.

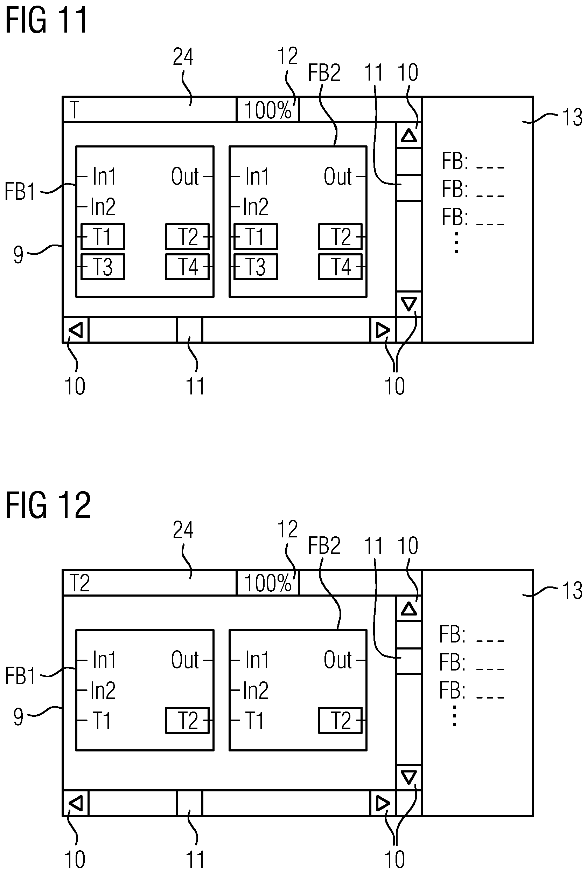

Denn insbesondere umfasst der Editor 4 entsprechend der Darstellung in den FIG 4 und 11 ein Suchfeld 24. Über eine Tastatur oder eine ähnliche Eingabeeinrichtung kann die Bedienperson 5 in das Suchfeld 24 eine Zeichenkette eingeben, beispielsweise entsprechend der Darstellung in FIG 11 zunächst den Buchstaben "T" und danach entsprechend der Darstellung in FIG 12 die Ziffer "2". Sobald die Bedienperson 5 die Zeichenkette vorgibt, stellt der Editor 4 auf der Programmieroberfläche 9 zusätzlich zu den Anschlüssen 15, die der Editor 4 bereits aufgrund der ihnen zugeordneten Attribute 19 auf der Programmieroberfläche 9 darstellt, - also zusätzlich zu den Anschlüssen In1, In2, Out und T1 - weitere Anschlüsse 15 dar. Die zusätzlich dargestellten Anschlüsse 15 sind diejenigen Anschlüsse 15, deren jeweiliger Namen 18 die zu suchende Zeichenkette umfasst. Nachfolgend wird für die Darstellung der weiteren Anschlüsse 15 teilweise die Wortwahl "eingeblendet" verwendet.

Die Einblendung wird beibehalten, wenn und solange der jeweilige Name 18 des jeweiligen Anschlusses 15 die zu suchende Zeichenkette umfasst. Wenn und sobald der jeweilige Name 18 die zu suchende Zeichenkette nicht mehr umfasst - sei es, weil die Zeichenkette geändert wurde, sei es, weil die Zeichenkette komplett gelöscht wurde -, wird der jeweilige Anschluss 15 sofort wieder ausgeblendet, die Einblendung also beendet.

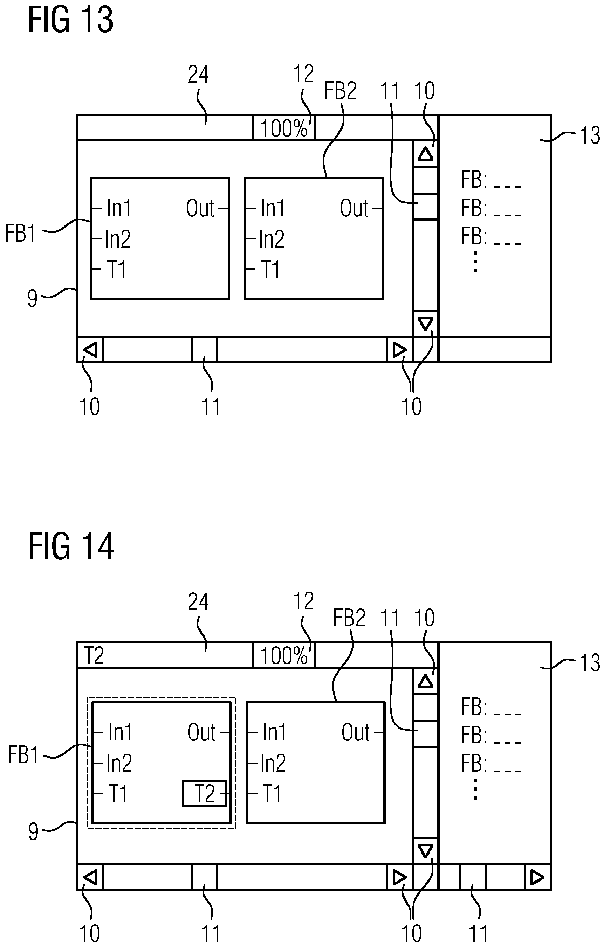

In der Situation gemäß FIG 11, bei welcher die Bedienperson 5 in das Suchfeld 24 nur den Buchstaben "T" eingegeben hat, besteht die Zeichenkette nur aus diesem einen Buchstaben. In diesem Fall sind die eingeblendeten Anschlüsse 15 die Anschlüsse T2, T3 und T4 beider Funktionsbausteine FB. In der Situation gemäß FIG 12, bei welcher die Bedienperson 5 in das Suchfeld 24 zusätzlich die Ziffer "2" eingegeben hat, sind dies die Anschlüsse T2 beider Funktionsbausteine FB. Diese Anschlüsse 15 - also in der Situation gemäß FIG 11 die Anschlüsse T2, T3 und T4 beider Funktionsbausteine FB und in der Situation gemäß FIG 12 die Anschlüsse T2 beider Funktionsbausteine FB - werden also in der Situation gemäß FIG 11 bzw. 12 dargestellt, obwohl sie aufgrund ihres jeweiligen Attributs 19 eigentlich nicht dargestellt werden sollen. Gemäß FIG 12 werden aber die Anschlüsse T3 und T4 beider Funktionsbausteine FB sofort wieder ausgeblendet, sobald die zu suchende Zeichenkette von "T" auf "T2" erweitert wird. Weiterhin werden alle eingeblendeten Anschlüsse 15 ausgeblendet, wenn entsprechend der Darstellung in FIG 13 die zu suchende Zeichenkette vollständig gelöscht wird.

Solange die zu suchende Zeichenkette vorgegeben ist, bleibt die Darstellung aller aufgrund ihres jeweiligen Attributs 19 eigentlich nicht darzustellenden Anschlüsse 15, deren jeweiliger Name 18 die Zeichenkette umfasst, also erhalten. Wenn und solange derartige Anschlüsse 15 aufgrund des Umstands, dass ihr Name 18 die zu suchende Zeichenkette enthält, zusätzlich mit dargestellt werden (= eingeblendet werden), können sie vom Editor 4 und von der Bedienperson 5 auch so gehandhabt werden, als wenn es sich um Anschlüsse 15 handeln würde, die aufgrund ihres Attributs 19 dargestellt werden. Die nur temporär eingeblendeten Anschlüsse 15 - beispielsweise in der Situation gemäß FIG 12 die Anschlüsse T2 - können also so wie die sichtbar geschalteten Anschlüsse 15 parametriert werden, attributiert werden, ihre Beschreibung abgerufen werden, mit anderen Anschlüssen 15 verbunden werden usw. Die Vorgehensweisen sind völlig analog zu den obenstehend in Verbindung mit den sichtbaren Anschlüssen 15 erläuterten Vorgehensweisen, beispielsweise den Vorgehensweisen gemäß den FIG 7 bis 10. Insbesondere ist es - aus der temporären Darstellung gemäß den FIG 11 und 12 heraus - sogar möglich, dass der Editor 4 aufgrund einer entsprechenden Vorgabe V durch die Bedienperson 5 das Attribut 19 eines derartigen, nur eingeblendeten Anschlusses 15 ändert. Die Bedienperson 5 kann also auch einen derartigen, nur eingeblendeten Anschluss 15 sichtbar schalten. In diesem Fall und nur in diesem Fall bleibt der Anschluss 15 auch dann sichtbar, wenn sein Name 18 die zu suchende Zeichenkette nicht mehr enthält. Denn dann weist das Attribut 19 dieses Anschlusses 15 einen anderen Wert auf, so dass dieser Anschluss 15 nunmehr sichtbar geschaltet ist. Dadurch ist die Bedienperson 5 auf einfache Weise in der Lage, einen zuvor unsichtbaren Anschluss 15 in einen sichtbaren Anschluss 15 umzuwandeln.

Aber auch wenn die nur temporär eingeblendeten Anschlüsse 15 wieder ausgeblendet werden, bleiben während der Einblendung vorgenommene Parametrierungen, Attributierungen und Verbindungen erhalten. Bezüglich der Attributierungen wird in diesem Zusammenhang nochmals darauf hingewiesen, dass nicht notwendigerweise nur die Eigenschaft "sichtbar" bzw. "unsichtbar" durch ein Attribut 19 festgelegt werden kann.

Sofern dem Editor 4 von der Bedienperson 5 eine zu suchende Zeichenkette vorgegeben wird, blendet der Editor 4 vorzugsweise nicht nur die unsichtbaren Anschlüsse 15, deren Namen 18 die Zeichenkette umfasst, mit ein. Vielmehr hebt der Editor 4 vorzugsweise in diesem Fall alle Anschlüsse 15, deren Name 18 die Zeichenkette umfasst, optisch hervor. Dies gilt sowohl für die (aufgrund ihres Attributs 19) sichtbaren Anschlüsse 15 als auch für die (nur aufgrund des Umstands, dass ihr Name 18 die zu suchende Zeichenkette umfasst) eingeblendeten Anschlüsse 15. Diese Hervorhebung bleibt ebenfalls für alle betroffenen Anschlüsse 15 aufrechterhalten, solange die entsprechende Übereinstimmung mit der zu suchenden Zeichenkette besteht. Die optische Hervorhebung ist in den FIG 11 und 12 durch eine Umrahmung der entsprechenden Anschlüsse 15 angedeutet.

Es ist möglich, bei der Suche nach Übereinstimmungen zwischen großen Buchstaben und kleinen Buchstaben zu unterscheiden. Auch kann einstellbar sein, ob zwischen großen Buchstaben und kleinen Buchstaben unterschieden werden soll oder nicht. FIG 11 zeigt den Fall, dass zwischen großen Buchstaben und kleinen Buchstaben unterschieden wird. Wenn umgekehrt zwischen großen Buchstaben und kleinen Buchstaben nicht unterschieden wird, müssten in der Darstellung von FIG 11 auch die Anschlüsse Out beider Funktionsbausteine FB1, FB2 mit hervorgehoben werden, da auch deren Name "Out" den Buchstaben "t" enthält.

Sofern eine optische Hervorhebung sowohl aufgrund einer Selektion (FIG 7, FIG 8, FIG 9) als auch aufgrund des Umstands, dass der Name 18 eines Anschlusses 15 die zu suchende Zeichenkette umfasst (FIG 11, FIG 12) besteht, kann die Hervorhebung auf unterschiedliche Art und Weise realisiert werden. Beispielsweise kann die Hervorhebung aufgrund einer Selektion durch Blinken des entsprechenden Anschlusses 15 und die Hervorhebung aufgrund des Umstands, dass der Name 18 eines Anschlusses 15 die zu suchende Zeichenkette umfasst, durch farbliche Hinterlegung bewirkt werden.

Soweit bisher erläutert, blendet der Editor 4 bei Vorgabe einer zu suchenden Zeichenkette alle Anschlüsse 15 aller Funktionsbausteine FB, die zwar unsichtbar geschaltet sind, deren Name 18 aber die zu suchende Zeichenkette umfasst, in die Darstellung auf der Programmieroberfläche 9 ein. Es ist aber möglich, dass der Editor 5 nach der Vorgabe der zu suchenden Zeichenkette aufgrund entsprechender Vorgaben V durch die Bedienperson 5 mindestens einen Funktionsbaustein FB selektiert und der Editor 4 die Einblendung der Anschlüsse 15, deren jeweiliger Name 18 die zu suchende Zeichenkette umfasst, auf die selektierten Funktionsbausteine FB beschränkt. Beispielsweise kann die Bedienperson 5 entsprechend der Darstellung in FIG 14, ausgehend von der Darstellung in FIG 12, den dortigen Funktionsbaustein FB1 selektieren. Die Selektion ist in FIG 14 durch eine gestrichelte Umrahmung des Funktionsbausteins FB1 dargestellt. In diesem Fall wird nur noch der Anschluss T2 des Funktionsbausteins FB1 eingeblendet. Die Einblendung des Anschlusses T2 des Funktionsbausteins FB2 wird vom Editor 4 hingegen beendet.

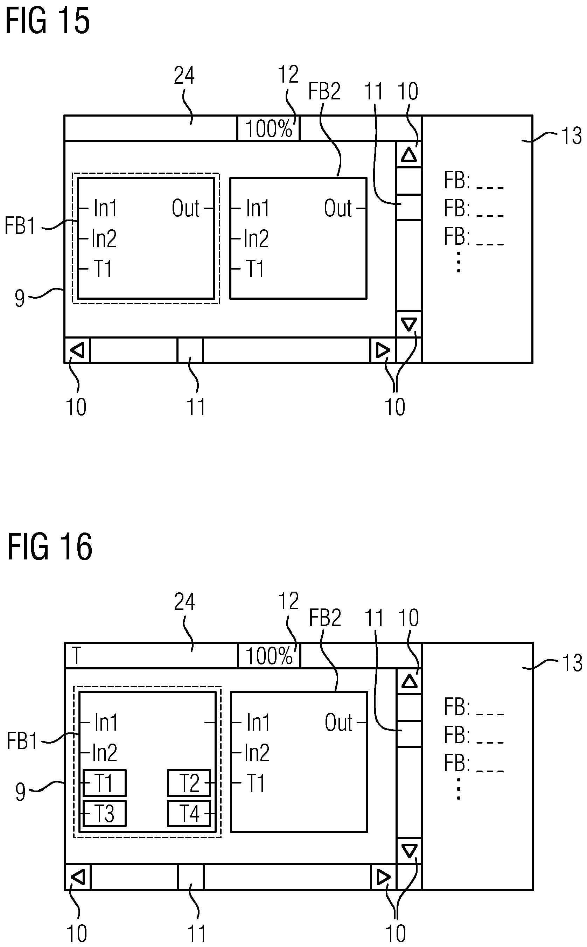

Die Vorgehensweise ist auch umgekehrt möglich. Beispielsweise ist es möglich, dass der Editor 4 aufgrund einer entsprechenden Selektion durch die Bedienperson 5 zunächst mindestens einen Funktionsbaustein FB selektiert, beispielsweise entsprechend der Darstellung in FIG 15 den Funktionsbaustein FB1. Die Selektion ist in FIG 15 durch eine gestrichelte Umrahmung des Funktionsbausteins FB1 dargestellt. Sodann gibt die Bedienperson 5 entsprechend der Darstellung in FIG 16 mit dem Buchstaben "T" eine zu suchende Zeichenkette vor, wodurch der Editor die zugehörigen Anschlüsse T2, T3 und T4 nur des selektierten Funktionsbausteins FB1 in die Darstellung einblendet.

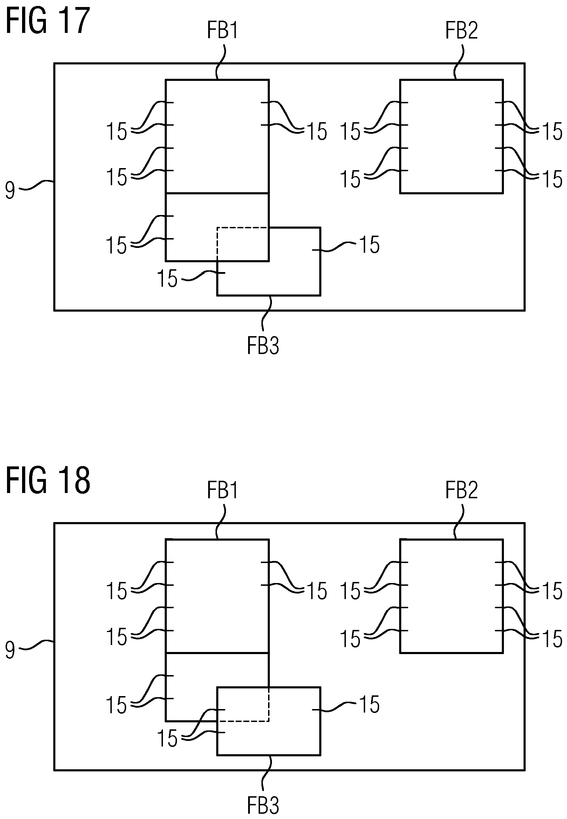

Wie bereits in Verbindung mit FIG 5 erwähnt und dort auch dargestellt, werden die instanziierten Funktionsbausteine FB auf der Programmieroberfläche 9 in der Regel derart angeordnet, dass sie sich gegenseitig nicht verdecken und meist sogar einen Abstand voneinander aufweisen. Dies gilt jedoch nur bezüglich der Funktionsbausteine FB, wie sie mit ihren sichtbaren Anschlüssen 15 dargestellt werden. Wenn nun nach der Platzierung der Funktionsbausteine FB auf der Programmieroberfläche 9 unsichtbare Anschlüsse 15 mit eingeblendet werden, muss der Editor 4 - zumindest in manchen Fällen - aufgrund dieses Umstands die Darstellung der entsprechenden Funktionsbausteine FB auf der Programmieroberfläche 9 vergrößern. Dies kann dazu führen, dass ein Darstellungskonflikt zwischen der entsprechend vergrößerten Darstellung eines Funktionsbausteins FB mit einem anderen Funktionsbaustein entsteht. Beispielsweise wird entsprechend der Darstellung in FIG 17 der Funktionsbaustein FB1 derart vergrößert, dass nach der Vergrößerung eine Überlappung mit dem Funktionsbaustein FB3 besteht.

Um einen derartigen Konflikt zu lösen, kann der Editor 4 entsprechend der Darstellung in FIG 17 bereits direkt beim Einblenden der zusätzlich dargestellten Anschlüsse 15 den Funktionsbaustein FB, der die eingeblendeten Anschlüsse 15 aufweist, im Vordergrund darstellen. In diesem Fall wird also entsprechend der Darstellung in FIG 17 der Funktionsbaustein FB3 durch die Vergrößerung des Funktionsbausteins FB1 teilweise oder vollständig verdeckt. Alternativ ist es möglich, den Funktionsbaustein FB, der durch das Einblenden der zusätzlich dargestellten Anschlüsse 15 vergrößert wird, zunächst im Hintergrund anzuordnen. Entsprechend der Darstellung in FIG 18 wird beispielsweise der vergrößerte Funktionsbaustein FB1 in demjenigen Bereich, um den er vergrößert wurde, teilweise vom Funktionsbaustein FB3 verdeckt. In diesem Fall wird aber zu der Darstellung gemäß FIG 17 übergewechselt, sofern die Bedienperson 15 den entsprechenden Funktionsbaustein FB selektiert, im vorliegenden Fall also den Funktionsbaustein FB1.

Das Erstellen des Steuerprogramms 6 durch den Editor 4 erfolgt auf an sich konventionelle Art und Weise. Insbesondere berücksichtigt der Editor 4 beim Erstellen des Steuerprogramms 6 die instanziierten Funktionsbausteine FB und die von der Bedienperson 5 vorgegebenen Parametrierungen und Verbindungen der Anschlüsse 15 der instanziierten Funktionsbausteine FB. Der Editor 4 erstellt das Steuerprogramm 6 somit derart, dass die Steuereinrichtung 7 entsprechend der Darstellung in FIG 3 bei Ausführung des Steuerprogramms 6 zumindest teilweise reale Funktionsbausteine FB' generiert und die generierten realen Funktionsbausteine FB' entsprechend den vorgegebenen Parametrierungen und Verbindungen parametriert und verbindet. Die Art der Erstellung des Steuerprogramms 6 unterscheidet sich nicht von der Art und Weise, auf die - bei gegebenen Funktionsbausteinen FB, Parametrierungen und Verbindungen - das Steuerprogramm 6 auch im Stand der Technik erstellt wird.

Zusammengefasst betrifft die vorliegende Erfindung somit folgenden Sachverhalt:
Ein Editor 4 bietet einer Bedienperson 5 vordefinierte Funktionsbausteine FB zur Instanziierung an. Er instanziiert die Funktionsbausteine FB und platziert sie aufgrund von Vorgaben V durch die Bedienperson 5 auf einer virtuellen Programmieroberfläche 9. Die Funktionsbausteine FB weisen jeweils Anschlüsse 15 auf, denen jeweils zumindest ein Name 18 und ein Attribut 19 zugeordnet sind. Das jeweilige Attribut 19 legt fest, ob der jeweilige Anschluss 15 auf der Programmieroberfläche 9 dargestellt werden soll oder nicht. Der Editor 4 stellt auf der Programmieroberfläche 9 zunächst nur die instanziierten Funktionsbausteine FB und deren darzustellende Anschlüsse 15 dar, nicht aber die nicht darzustellenden Anschlüsse 15. Der Editor 4 parametriert und/oder verbindet die dargestellten Anschlüsse 15 aufgrund von Vorgaben V der Bedienperson 5. Aufgrund eines Erstellungsbefehls B erstellt der Editor 4 das Steuerprogramm 6 für die Steuereinrichtung 7. Er berücksichtigt hierbei die instanziierten Funktionsbausteine FB und die Parametrierungen und Verbindungen von deren Anschlüssen 15. Bei Vorgabe einer zu suchenden Zeichenkette stellt der Editor 4 auf der Programmieroberfläche 9 zusätzlich zu den bereits dargestellten Anschlüssen 15 auch diejenigen Anschlüsse 15 dar, die zwar eigentlich nicht dargestellt werden sollen, deren jeweiliger Name 18 aber die Zeichenkette umfasst.

Die vorliegende Erfindung weist viele Vorteile auf. Die unsichtbaren Anschlüsse 15 können auf einfache Weise aufgefunden und kurzzeitig temporär sichtbar gemacht werden. Während der nur temporären Einblendung der unsichtbaren Anschlüsse 15 ist auf einfache, zuverlässige, schnelle und komfortable Art und Weise eine Parametrierung, Attributierung und auch Verbindung der unsichtbaren Anschlüsse 15 möglich. Dennoch bleibt die einfache, übersichtliche Darstellung des Schaltplans - also der Funktionsbausteine FB und deren sichtbare Anschlüsse 15 und deren Verbindungen miteinander - erhalten. Ein dauernder Wechsel zwischen der grafischen Darstellung auf der Programmieroberfläche 9 und dem Aufruf der Listen 16 wird deutlich reduziert oder sogar vollständig vermieden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Programmiergerät
- 1': Bildschirm oder Monitor
- 2: Computerprogramm
- 3: Maschinencode
- 4: Editor
- 5: Bedienperson
- 6: Steuerprogramm
- 7: Steuereinrichtung
- 8: technischer Prozess
- 9: Programmieroberfläche
- 10: Cursorfunktionen
- 11: Slider
- 12: Skalierungsfeld
- 13: Auswahlfeld
- 14: Markierungselement
- 15: Anschlüsse
- 16: Liste
- 17: Listeneinträge
- 18: Namen
- 19: Attribute
- 20: Parameter
- 21: Text
- 22: Menü
- 23: Verbindungslinie
- 24: Suchfeld

- B: Erstellungsbefehl
- FB, FB': Funktionsbausteine
- S1 bis S4: Schritte

## Patentansprüche

1. Verfahren zum Erstellen eines Steuerprogramms (6) für eine Steuereinrichtung (7),
- wobei ein Editor (4) einer Bedienperson (5) vordefinierte Funktionsbausteine (FB) zur Instanziierung anbietet,
- wobei der Editor (4) die Funktionsbausteine (FB) aufgrund von entsprechenden Vorgaben (V) durch die Bedienperson (5) instanziiert und die instanziierten Funktionsbausteine (FB) auf einer virtuellen Programmieroberfläche (9) platziert,
- wobei die Funktionsbausteine (FB) jeweils eine Anzahl von Anschlüssen (15) aufweisen,
- wobei den Anschlüssen (15) jeweils zumindest ein Name (18) und ein Attribut (19) zugeordnet sind,
- wobei das jeweilige Attribut (19) festlegt, ob der jeweilige Anschluss (15) bei der Darstellung des jeweiligen Funktionsbausteins (FB) auf der virtuellen Programmieroberfläche (9) dargestellt werden soll oder nicht,
- wobei der Editor (4) auf der virtuellen Programmieroberfläche (9) zunächst nur die instanziierten Funktionsbausteine (FB) und diejenigen Anschlüsse (15) der instanziierten Funktionsbausteine (FB) darstellt, die aufgrund des ihnen jeweils zugeordneten Attributs (19) auf der virtuellen Programmieroberfläche (9) dargestellt werden sollen, nicht aber diejenigen Anschlüsse (15) der instanziierten Funktionsbausteine (FB), die aufgrund des ihnen jeweils zugeordneten Attributs (19) auf der virtuellen Programmieroberfläche (9) nicht dargestellt werden sollen,
- wobei der Editor (4) auf der virtuellen Programmieroberfläche (9) dargestellte Anschlüsse (15) aufgrund einer entsprechenden Vorgabe (V) durch die Bedienperson (5) parametriert und/oder miteinander verbindet,
- wobei der Editor (4) aufgrund eines von der Bedienperson (5) vorgegebenen Erstellungsbefehls (B) das Steuerprogramm (6) für die Steuereinrichtung (7) erstellt,
- wobei der Editor (4) beim Erstellen des Steuerprogramms (6) die von der Bedienperson (5) instanziierten Funktionsbausteine (FB) und die von der Bedienperson (5) vorgegebenen Parametrierungen und Verbindungen der Anschlüsse (15) der instanziierten Funktionsbausteine (FB) berücksichtigt,
**dadurch gekennzeichnet,**
**dass** der Editor (4) bei Vorgabe einer zu suchenden Zeichenkette durch die Bedienperson (5) auf der virtuellen Programmieroberfläche (9) zusätzlich zu den Anschlüssen (15), die der Editor (4) bereits aufgrund der ihnen zugeordneten Attribute (19) auf der virtuellen Programmieroberfläche (9) darstellt, auch diejenigen Anschlüsse (15) darstellt, die zwar aufgrund der ihnen zugeordneten Attribute (19) nicht auf der virtuellen Programmieroberfläche (9) dargestellt werden sollen, deren jeweiliger Name (18) aber die Zeichenkette umfasst.

2. Verfahren nach Anspruch 1,
**dadurch gekennzeichnet,**
**dass** der Editor (4) bei Vorgabe der zu suchenden Zeichenkette diejenigen Anschlüsse (15), deren Namen (18) die Zeichenkette umfasst, optisch hervorgehoben darstellt.

3. Verfahren nach Anspruch 1 oder 2,
**dadurch gekennzeichnet,**
**dass** der Editor (4) aufgrund einer entsprechenden Vorgabe (V) durch die Bedienperson (5) einen der dargestellten Anschlüsse (15) selektiert und dass der Editor (4) aufgrund der Selektion des einen dargestellten Anschlusses (15) automatisch diejenigen der dargestellten Anschlüsse (15) optisch hervorgehoben darstellt, die mit dem selektierten Anschluss (15) prinzipiell verbindbar sind.

4. Verfahren nach Anspruch 1, 2 oder 3,
**dadurch gekennzeichnet,**
**dass** der Editor (4) aufgrund einer entsprechenden Vorgabe (V) durch die Bedienperson (5) das Attribut (19) eines der dargestellten Anschlüsse (15) ändert.

5. Verfahren nach einem der obigen Ansprüche,
**dadurch gekennzeichnet,**
**dass** der Editor (4) aufgrund einer entsprechenden Vorgabe (V) durch die Bedienperson (5) einen einzelnen dargestellten Anschluss (15) eines instanziierten Funktionsbausteins (FB) selektiert und dass der Editor (4) aufgrund der Selektion eine vollständige Beschreibung des selektierten Anschlusses (15) an die Bedienperson (5) ausgibt.

6. Verfahren nach einem der obigen Ansprüche,
**dadurch gekennzeichnet,**
**dass** der Editor (4) vor oder nach der Vorgabe der zu suchenden Zeichenkette durch die Bedienperson (5) aufgrund entsprechender Vorgaben (V) durch die Bedienperson (5) mindestens einen instanziierten Funktionsbaustein (FB) selektiert und dass der Editor (4) die vom Attribut (19) des jeweiligen Anschlusses (15) unabhängige Darstellung der Anschlüsse (15), deren Name (18) die Zeichenkette umfasst, auf die selektierten Funktionsbausteine (FB) beschränkt.

7. Verfahren nach einem der obigen Ansprüche,
**dadurch gekennzeichnet,**
**dass** der Editor (4) die Darstellung der instanziierten Funktionsbausteine (FB) auf der virtuellen Programmieroberfläche (9) aufgrund der zusätzlichen Darstellung der Anschlüsse (15), die aufgrund des ihnen zugeordneten Attributs (19) nicht dargestellt werden sollen, deren Namen (18) aber die Zeichenkette umfasst, vergrößert, und dass der Editor (4) die zusätzlich dargestellten Anschlüsse (15) bereits bei der Darstellung dieser Anschlüsse (15) als solcher oder aufgrund einer Selektion des entsprechenden instanziierten Funktionsbausteins (FB) durch die Bedienperson (5) im Vordergrund darstellt.

8. Computerprogramm, das Maschinencode (3) umfasst, der von einem Programmiergerät (1) abarbeitbar ist, wobei die Abarbeitung des Maschinencodes (3) durch das Programmiergerät (1) bewirkt, dass das Programmiergerät (1) einen Editor (4) implementiert, der bei seinem Aufruf ein Verfahren nach einem der obigen Ansprüche ausführt.

9. Programmiergerät, wobei das Programmiergerät mit einem Computerprogramm (2) nach Anspruch 8 programmiert ist, so dass die Ausführung des Computerprogramms (2) bewirkt, dass das Programmiergerät einen Editor (4) implementiert, der bei seinem Aufruf ein Verfahren nach einem der Ansprüche 1 bis 7 ausführt.
